# EUROPEAN PATENT SPECIFICATION

(11) **EP 2 195 237 B1**
(45) Date of publication and mention of the grant of the patent: **27.02.2013**
(21) Application number: 08836934.3
(22) Date of filing: 13.10.2008
(51) Int. Cl.: B64C 25/00, B64C 25/22, B64C 25/34, B64C 25/58, B64C 25/60, F16F 9/06

(54) **LOAD DETECTION IN AN AIRCRAFT LANDING GEAR**
BELASTUNGSERKENNUNG IN EINEM FLUGZEUGFAHRWERK
DETECTION DE CHARGE DANS UN TRAIN D'ATTERRISSAGE D'AVION

(30) Priority: 09.10.2007 GB 0719732
(43) Date of publication of application: 16.06.2010
(73) Proprietor: Messier-Dowty Limited, Gloucestershire GL2 9QH (GB)
(72) Inventor: BENNETT, Ian, Cheltenham Gloucestershire GL51 6AF (GB)
(74) Representative: Wardle, Callum Tarn
(86) International application number: PCT/EP2008/063743
(87) International publication number: WO 2009/047367

(56) References cited:
- EP-A- 1 041 001
- EP-A- 1 749 741
- WO-A-2007/023280
- GB-A- 2 033 534
- US-A1- 2006 220 917

## Description

The present invention relates to load detection in a landing gear for an aircraft.

It is desirable to monitor the loading applied to a landing gear during an overload landing in order to determine whether the designed strength level has been exceeded, or is in danger of being exceeded.

It is also desirable to monitor the landing load during a normal landing in order to assess the fatigue loading applied to the gear.

According to the invention, a landing gear for an aircraft comprises a shock absorber strut with upper and lower telescoping portions, the upper portion being connectable to the airframe of the aircraft; an arm to extend fore and aft relative to the aircraft and carrying a landing wheel, and pivotally connected by a main pivot to the lower portion of the shock absorber strut; and a load reacting unit connected between the arm and the shock absorber strut for reacting to load applied between the arm and shock absorber strut on landing, and an indicator for monitoring the load applied to the load reacting unit on landing.

Furthermore, the invention relates to a method of monitoring the load on a landing gear as claimed in claim 19.

The invention recognises that friction from sliding bearings in the shock absorber strut make a significant difference to the load for a given shock absorber internal pressure (or alternatively the shock absorber pressure may be different for the same applied load, depending upon bearing friction). Bearing friction is highly variable, depending upon the coefficient of friction and the load applied normal to the bearings.

Thus the invention recognises that more accurate measurement of load can be made by measuring the load in the load reacting unit, which is less affected by friction than the shock absorber strut. That is, in a fluid pressure load reacting unit the pressure is much more closely related to the load applied to the arm than is the pressure in the shock absorber strut.

The load reacting unit may be pin-jointed, or mounted on spherical bearings at each end, resulting in minimal loading normal to its sliding bearings.

The fluid may be air (or another gas), but more preferably is a liquid.

In the embodiments described below, the arm, may be the arm of semi-levered landing gear, and/or a bogie beam with fore and aft landing wheels.

The invention will now be described by way of example with reference to the accompanying drawings in which:

EP1041001, the closest prior art, discloses the preamble of independent claim 1. It shows a semi-levered landing gear including a main strut and pivotal bogie arrangement. An auxiliary strut including a lock-up valve is connected between the main strut and one end of the bogie, arranged to lock up at in intermediate length on take off. When the main strut extends, the locked auxiliary strut causes the landing gear to tilt into a nose-up configuration.
Figure 1 is a schematic drawing of a semi-levered landing gear for an aircraft according to a first embodiment of the invention;
Figure 2 is a section through the indicator in Figure 1 shown in the non-operated state;
Figure 3 is a section similar to that of Figure 2 showing the indicator partially operated;
Figure 4 is a section similar to Figure 2 showing the indicator fully operated;
Figure 5 is a schematic drawing showing various electronic components connected to the pressure sensor;
Figure 6 is a schematic drawing of a semi-levered landing gear for an aircraft according to a second embodiment of the invention; and
Figure 7 is a schematic drawing of a rocking bogie landing gear for an aircraft according to a third embodiment of the invention.

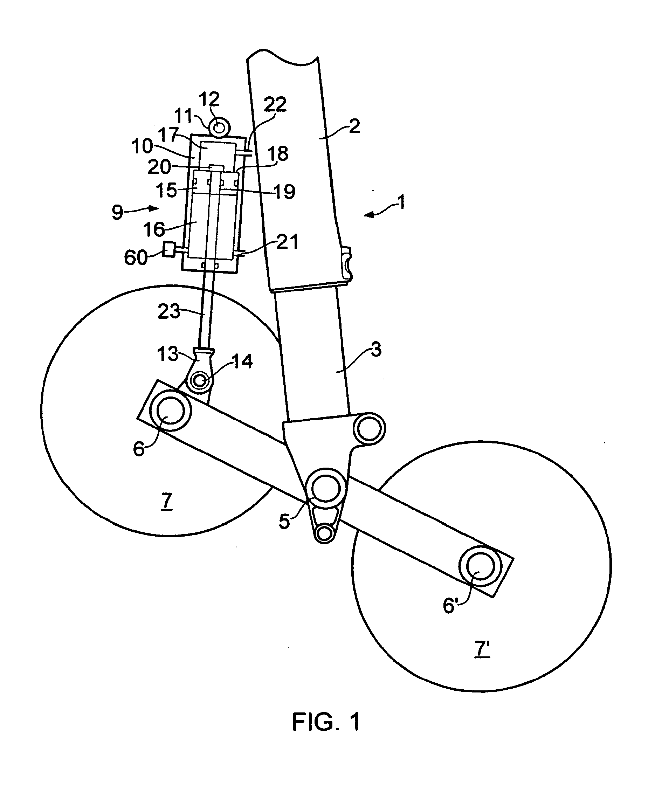

The landing gear illustrated in Figure 1 comprises a main hydraulic shock absorber strut 1 comprising an upper portion 2 connectable to the underside of an aircraft at its upper end, and a lower portion 3 which telescopes within the upper portion 2 during take-off and landing. A bogie beam 4 extends fore and aft of the aircraft and is pivotally connected to the bottom of the lower portion 3 by a main pivot 5 in the mid-region of the bogie beam 4. Axles 6, 6' are mounted at each end of the bogie beam 4 and carry wheels 7, 7'. The internal construction of the main strut 1 is not shown in Figure 1 but it may take a conventional form such as shown in GB1510554 and contain pressurised oil and gas.

A load reacting unit 9 is connected between the upper portion 2 of the main strut and the forward section of the bogie beam 4 to control the angular position of the bogie beam during taxiing, take-off and landing. The unit 9 comprises an outer cylinder casing 10 with a closed upper end carrying an upper connector 11 which is pivotally connected at 12 to the upper end 2 of the main strut. A piston rod 23 extends from the lower end of the cylinder casing 10 and carries a lower connector 13 which is pivotally connected at 14 to the front end of the bogie beam between the axle 6 and the main pivot 5. A side stay (not shown) is connected between the upper portion 2 of the shock absorber strut and the aircraft, and moves with the strut when the landing gear is moved to a stowed position in the aircraft by a stowing actuator (not shown).

The load reacting unit 9 has a piston 15 within the cylinder casing 10 that divides the internal space into a high pressure chamber 16 on one side of the piston and a low pressure chamber 17 on the other side of the piston with an internal shoulder 18 between the two chambers 16, 17 against which the piston is urged by high pressure fluid within the chamber 16. The piston rod 23 extends through an axial aperture 19 in the piston and carries a retainer 20 at its inner end to hold the piston 15 captive on the rod 23. A tensile force applied between the connectors 11, 13 will cause the retainer to engage the piston 15 and for the two to move together in acting against the high pressure fluid, which flows in a hydraulic control circuit including a high pressure port 21 with a flow restrictor. When the applied tensile force is released, the rod 23 and piston 15 return to the position shown in Figure 1 with the piston 15 seating against the shoulder 18, and the rod 23 will extend further into the lower pressure chamber 17 if moved further by the bogie beam 4. The low pressure chamber 17 is connected into the control circuit via a low pressure port 22.

In an alternative embodiment of the invention, movement of the piston 15 and piston rod 23 with the tensile load may be accommodated by valving in the piston to allow the flow of oil between the chambers 16, 17 either side of the piston, the flow being more restricted when the unit is extending, compared with the flow when the unit is retracting.

In operation, the bogie beam 4 is tilted into the position shown in Figure 1 with the rear wheel 17' contacting the ground on landing. The bogie beam 4 then rotates anticlockwise, thereby compressing the strut 1. The high pressure in the load reacting unit 9 ensures that there is little or no extension of unit 9. The shortening of the strut 1 continues until the forward wheel 7 makes contact with the ground, thereby relieving the tensile load in the unit 9. The load reacting unit 9 then contracts to accommodate the shortening of the main strut 1. The main strut 1 then functions as a conventional shock absorber.

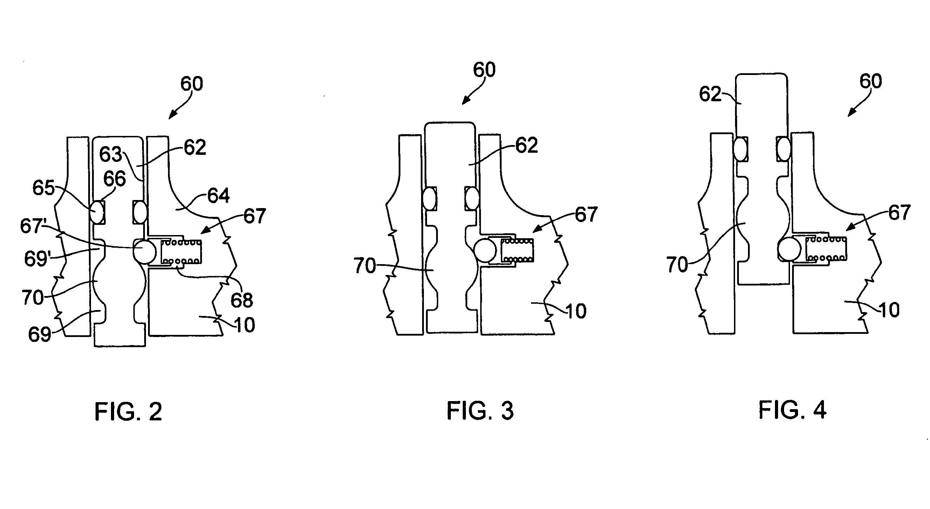

Thus on landing, the load reacting unit 9 is pressurised, and the pressure can be taken as indicative of the landing load. Therefore, a landing load indicator 60 is provided in the unit 9 to be responsive to the internal fluid pressure. The indicator 60 shown in Figure 2 comprises a bobbin 62 that is a slide fit in a bore 63 of a body 64 that is exposed at an inner end to the fluid pressure and opens to the exterior of the unit 9 for inspection by service engineers. The bobbin 62 is sealed in the bore 63 by an O-ring seal 65 seated in an annular groove 66 in the bobbin. In order to limit movement of the bobbin 62 in the bore 63, a spring-loaded detent 67 is mounted in a lateral bore 68 in the body 64 so as to be urged towards the bore 63. The detent 67 has a rounded end formed by a ball 67' which engages a profiled surface of the bobbin 62. The profile consists of two annular grooves 69, 69' spaced apart by a barrel-shaped shoulder 70 over which the rounded end of the detent 67 rides as the bobbin moves from the normal retracted position of Figure 2 to an extended overload indicating position of Figure 4. The barrel shape of the shoulder 70 ensures a controlled movement of the bobbin 62 with increasing pressure as shown in Figure 3, and the force of the engagement of the detent 67 with the bobbin once it has passed the crown of the barrel-shaped shoulder 70 serves to assist operation to the extended position. Once the indicator has been operated, the force of engagement of the detent in the groove 69' is sufficient to hold the bobbin in place under increased internal fluid pressure.

The bobbin 62 is preferably painted a bright colour to increase its visibility once operated. The bobbin 62 may be reset by manual depression or, if needed, a special tool or key may be provided.

The invention makes use of the close correlation between the pressure in the load reaction unit 9 and the load on the aft axle 4, on touchdown. The bearing friction for the auxiliary actuator 9 will be small, because it is mounted on spherical bearings 12, 14 at each end. Friction at the bogie pivot 5 and seal friction will also exist, but can be shown to be small. Furthermore the bogie will always be rotating in the same direction during initial compression on landing. Therefore the results can be compensated to account for the mean friction value, with the only remaining error being due to a variation in friction.

The appropriate pressure threshold value at which the indicator operates may be determined after taking into account the normal aircraft attitude and landing gear geometry, acceptable landing gear load limits, and an allowance for variations or tolerances.

A single indicator 60 may be provided in the load reaction unit 9 to give an indication of the occurrence of an overload condition during landing. Alternatively, two or more indicators 60 may be provided, each set to operate at a different internal fluid pressure so that different load thresholds can be indicated. For example, two indicators can between them define an indicator range with one operating at a lower pressure and the other at a higher pressure. Different indicators may serve to trigger different inspection and safety procedures. Alternatively, multiple indicators 60 may be set to operate at slightly different pressures to reduce error margins due to tolerances.

In an alternative embodiment of the invention, the indicator 60 may comprise a pressure sensor rather than a mechanical pressure threshold indicator. Means may be provided to monitor pressure variations and to indicate when a threshold has been exceeded.

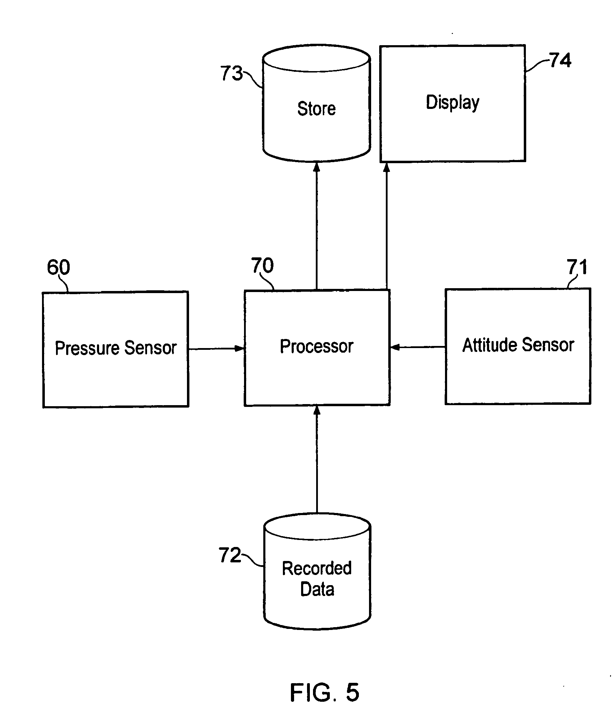

Figure 5 is a schematic representation of a load detection system which incorporates a pressure sensor 60 comprising a load transducer with an electrical output corresponding to sensed pressure in the load reacting unit 9.

The output of the pressure sensor is received by a processor 75 which records the raw pressure data in a store 73. Simple geometry determines a relationship between the load in the unit 9 and the load applied to the aft axle by using a method such as comparing moments about the shock absorber to bogie pivot. This relationship is predetermined and stored in a.recorded data store 72, enabling the processor 75 to derive a value indicative of the load applied to the aft axle from the pressure data and store the aft axle load values in the store 73.

The processor 75 may be set to determine whether the output of the pressure sensor, or a value derived therefrom (such as the aft axle load) has exceeded a pre-set threshold.

A potential drawback is that the moment about the bogie pivot 5 depends upon the direction of the load at the aft axle as well as its magnitude. Thus the processor 73 makes assumptions about the load direction based upon real-time data received from sensors such as aircraft attitude sensor 71, and pre-recorded data such as runway coefficient of friction, rolling stock inertia stored in pre-recorded data store 72. In this way, the processor 75 calculates the direction of the load applied to the aft axle and processes the measured direction to calculate a load value.

Also, the movement about the bogie axle 5 is dependent upon the coefficient of friction between the tyre of the wheel 7 and the runway on touchdown. In order to compensate for this variation, the recorded data store 72 may include a database of airport runway coefficient of friction values compensated for weather conditions. Alternatively, the system may make use of coefficient of friction data transmitted by another aircraft having just landed on the same runway. Alternatively, tyre spin-up rates may be measured, for example, by comparing spin-up time with ground speed and known rolling stock inertia, to determine coefficient of friction. Alternatively, coefficient of friction may be determined through the drag loading on a landing gear.

The measurement of load in the load reacting unit 9 (and hence aft axle load) may be used as part of a comprehensive load measuring system. The load measurement may be processed by the processor 75 in combination with the results from other sensors in order to obtain a more complete indication of all the loads applied.

A display device 74 can display a variety of indications, including the raw pressure data, the aft axle load data, or simply an indication of an overload landing when the pressure has exceeded the pre-set threshold.

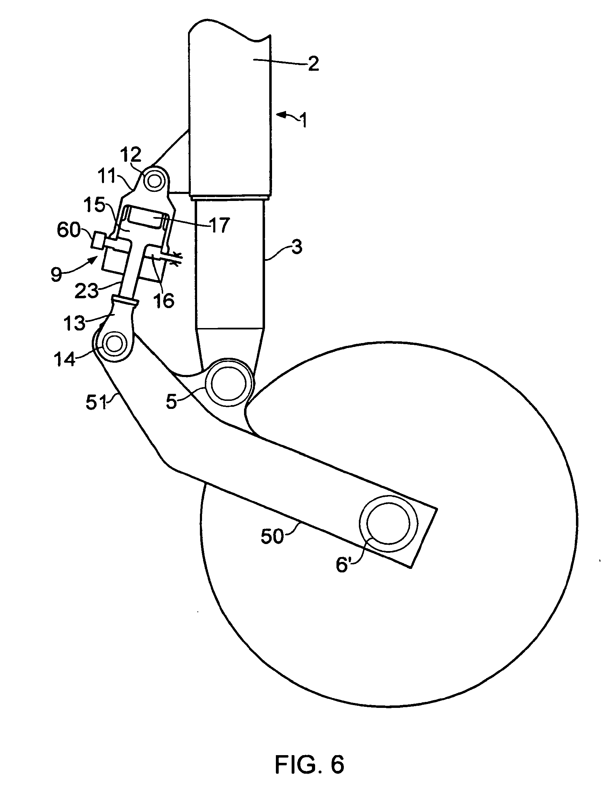

Another embodiment of the invention shown in Figure 6 is similar to the embodiment of Figure 1, and the same reference numerals are used for similar components. The bogie beam 4 of Figure 1 is replaced by a beam with an aft arm 50 carrying the wheel 7', and a forward arm 51 (which does not carry a wheel) carrying a load reacting unit 9. The load reacting unit 9 has an upper connector 11, an upper pivot 12 for pivotally connecting the upper connector to the upper portion of the shock absorber strut 2, a lower connector 13, and a lower pivot 14 for pivotally connecting the lower connector to the forward arm 51. A telescopic unit comprising cylinder casing 10, piston 15 and piston rod 23 contains fluid for reacting to load applied between the upper and lower connectors, and a pressure indicator or sensor 60 is provided for monitoring the pressure in the fluid. A hydraulic circuit is also provided to react the tensile loading and compensate for fluid loss or differential displacement areas. The upper chamber 17 may be connected to atmospheric pressure.

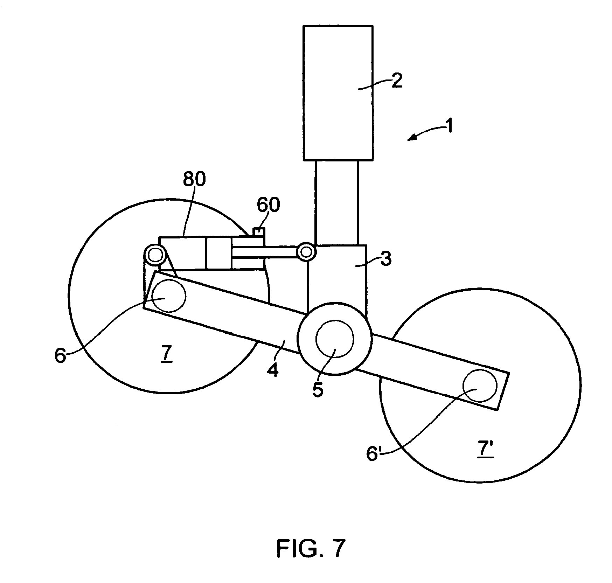

Another embodiment of the invention is illustrated in Figure 7, as applied to a rocking bogie landing gear fitted with a pitch trimmer 80 to control the position of the bogie on landing. Rotation of the bogie about the pivot 5 on landing is resisted by the pitch trimmer 80, which increases the hydraulic pressure of one or more internal chambers. A landing load indicator 60 is provided in the pitch trimmer 80 to be responsive to the internal hydraulic pressure, and may be designed to operate in a similar manner to the indicator 60 described in the earlier embodiments. The pitch trimmer 60 will not experience reaction loads as large as those of the load reaction units 9 in Figures 1 and 6 but the same operating principles apply.

In another embodiment of the invention, the landing load indicator in Figure 7 may be adapted to be responsive to speed of reaction movement in the pitch trimmer. For example, a differential pressure within the pitch trimmer might be monitored representing a rate of flow of hydraulic fluid and thus a reaction movement. A sensor signal generated by the indicator is monitored to detect reaction movements corresponding to a heavy landing.

In other embodiments of the invention, the pitch trimmer 80 in Figure 7 may be connected between the aft end of the bogie 4 and the lower portion 3 of the shock absorber strut.

## Claims

1. A landing gear for an aircraft comprising:
a shock absorber strut (1) with upper and lower telescoping portions (2, 3), the upper portion (2) being connectable to the airframe of the aircraft;
an arm (4) to extend fore and aft relative to the aircraft and carrying a landing wheel(7, 7'), and pivotally connected by a main pivot (5) to the lower portion (3) of the shock absorber strut (1); and
a load reacting unit (9) connected between the arm (4) and the shock absorber strut (1) for reacting to load applied between the arm (4) and shock absorber strut (1) on landing, and
an indicator (60);
**characterised in that** the indicator (60) monitors the load applied to the load reacting unit (9) on landing.

2. A landing gear as claimed in claim 1 in which the load reacting unit (9) is connected between a forward end of the arm (4) and the upper portion (2) of the shock absorber strut (1) and serves to make the gear act as a semi-levered landing gear.

3. A landing gear as claims in claim 1 in which the load reacting unit (9) is connected between the arm (4) and the lower portion (3) of the shock absorber strut (1) to act as a pitch trimmer.

4. A landing gear as claimed in claim 3 in which the load reacting unit (9) is connected between the forward end of the arm (4) and the lower portion (3) of the shock absorber.

5. A landing gear as claimed in any preceding claim wherein the arm (4) comprises a bogie beam with fore and aft landing wheels (7, 7') with the main pivot therebetween.

6. A landing gear as claimed in any one of the preceding claims in which the load reacting unit (9) comprises a fluid pressure unit and the indicator (60) is responsive to pressure in the unit.

7. A landing gear as claimed in claim 6 in which the indicator (60) comprises a mechanical indicator exposed to pressure in the unit so as to be operated at a predetermined pressure threshold.

8. A landing gear as claimed in claim 7 in which the mechanical indicator cooperates with a spring-loaded detent that defines a normal position and an operated position of the indicator.

9. A landing gear as claimed in claim 5 or 6 comprising two or more indicators set to operate at different threshold pressures.

10. A landing gear as claimed in claim 6 in which the indicator (60) comprises a pressure sensor generating an output signal in accordance with sensed pressure.

11. A landing gear as claimed in claim 10 further comprising means for recording the output of the pressure sensor.

12. A landing gear as claimed in claim 11 further comprising means for determining whether the output of the pressure sensor, or a value derived therefrom, has exceeded a pre-set threshold.

13. A landing gear as claimed in claim 6 in which the indicator (60) comprises a hydraulic sensor generating an output signal in accordance with the speed of reaction movement in the load reacting unit (9).

14. A landing gear as claimed in any preceding claim wherein one or both of pivots connecting the load reacting unit (9) to the arm (4) and shock absorber strut (1) comprise spherical bearings.

15. A landing gear as claimed in any preceding claim wherein one or both of pivots connecting the load reacting unit (9) to the arm (4) and shock absorber strut (1) comprise pin joints.

16. A landing gear as claimed in claim 9 further comprising a load calculator for processing the output of the pressure sensor to calculate a value indicative of the load applied to the arm (4).

17. A landing gear as claimed in claim 16 further comprising a sensor for sensing the direction of the load applied to the arm (4) and generating an output which is processed by the load calculator to calculate a value indicative of the load applied to the arm (4).

18. A landing gear as claimed in claim 17 wherein the sensor for sensing the direction of the load applied to the arm (4) comprises an aircraft attitude sensor.

19. A method of monitoring the load on a landing gear for an aircraft comprising:
a shock absorber strut (1) with upper and lower telescoping portions (2, 3), the upper portion (2) being connectable to the airframe of the aircraft;
an arm (4) to extend fore and aft relative to the aircraft and carrying a landing wheel (7, 7'), and a main pivot (5) pivotally connecting the arm (4) to the lower portion (3) of the shock absorber strut (1); and
a load reacting unit (9) with a first connector, a first pivot for pivotally connecting the first connector to the shock absorber strut (1) or to the airframe, a second connector, a second pivot for pivotally connecting the second connector to the arm, a telescopic unit (9) for reacting to load applied between the first and second connectors,
**characterised by** the method comprising monitoring the reaction load in the telescopic unit (9).

20. A method as claimed in claim 19 further comprising measuring a fluid pressure in the telescopic unit (9) and processing the measurement to calculate a value indicative of the load applied to the arm (4).

21. A method as claimed in claim 20 further comprising measuring the direction of the load applied to the arm (4) and processing the measured direction to calculate the value indicative of the load applied to the arm (4).

22. A method as claimed in any of claims 19 to 21 further comprising measuring the pressure and recording the measured pressure, or a value derived therefrom.

23. A method as claimed in any of claims 19 to 21 further comprising measuring the pressure and displaying the measured pressure, or a value derived from the measured pressure.

24. A method as claimed in any of claims 19 to 23 further comprising measuring the pressure and determining whether the measurement, or a value derived therefrom, has exceeded a pre-set threshold.

25. A method as claimed in claim 19 further comprising monitoring a pressure in the telescopic unit (9) and generating an output signal in accordance with the speed of reaction movement in the telescopic unit (9).

## Patentansprüche

1. Fahrwerk für ein Flugzeug umfassend:
eine Stoßdämpfer-Strebe (1) mit oberen und unteren teleskopierenden Abschnitten (2, 3), der obere Abschnitt (2) ist mit der Flugzeugzelle des Flugzeugs verbindbar;
einen Arm (4), der sich der ganzen Länge nach relativ zum Flugzeug erstreckt und ein Landerad (7, 7') trägt und zentral durch einen Hauptdrehpunkt (5) mit dem unteren Abschnitt (3) der Stoßdämpfer-Strebe (1) verbunden ist; und
eine auf Last reagierende Einheit (9), die zwischen dem Arm (4) und der Stoßdämpfer-Strebe (1) verbunden ist, zum Reagieren auf eine Last, die beim Landen zwischen dem Arm (4) und der Stoßdämpfer-Strebe (1) aufgebracht wird, und
eine Anzeige (60);
**dadurch gekennzeichnet, dass** die Anzeige (60) die Last, die beim Landen auf die auf Last reagierende Einheit (9) aufgebracht wird, überwacht.

2. Fahrwerk gemäß Anspruch 1, in dem die auf Last reagierende Einheit (9) zwischen einem vorderen Ende des Arms (4) und dem oberen Abschnitt (2) der Stoßdämpfer-Strebe (1) verbunden ist und dazu dient, das Fahrwerk als ein halb mittels Hebel arbeitendes Fahrwerk wirken zu lassen.

3. Fahrwerk gemäß Anspruch 1, in dem die auf Last reagierende Einheit (9) zwischen dem Arm (4) und dem unteren Abschnitt (3) der Stoßdämpfer-Strebe (1) verbunden ist, um als ein Neigungstrimmer zu wirken.

4. Fahrwerk gemäß Anspruch 3, in dem die auf Last reagierende Einheit (9) zwischen einem vorderen Ende des Arms (4) und dem unteren Abschnitt (3) des Stoßdämpfers verbunden ist.

5. Fahrwerk gemäß einem der vorhergehenden Ansprüche, wobei der Arm (4) einen Drehgestellträger mit Landerädern (7, 7') in Längsrichtung umfasst, mit dem Hauptdrehpunkt (5) dazwischen.

6. Fahrwerk gemäß einem der vorhergehenden Ansprüche, in dem die auf Last reagierende Einheit (9) eine Flüssigkeitsdruckeinheit umfasst und die Anzeige (60) auf Druck in der Einheit reaktionsfähig ist.

7. Fahrwerk gemäß Anspruch 6, in dem die Anzeige (60) eine mechanische Anzeige umfasst, die Druck in der Einheit ausgesetzt ist, derart, dass sie bei einem vorbestimmten Druckschwellenwert betrieben wird.

8. Fahrwerk gemäß Anspruch 7, in dem die mechanische Anzeige mit einer federbelasteten Rastung, die eine normale Stellung und eine Arbeitsstellung der Anzeige festlegt, zusammenwirkt.

9. Fahrwerk gemäß Anspruch 5 oder 6, umfassend zwei oder mehr Anzeigen, die eingestellt sind, bei unterschiedlichen Schwellenwert-Drücken zu arbeiten.

10. Fahrwerk gemäß Anspruch 6, in dem die Anzeige (60) einen Drucksensor umfasst, der ein Ausgabesignal in Übereinstimmung mit dem wahrgenommenen Druck erzeugt.

11. Fahrwerk gemäß Anspruch 10, weiter umfassend Mittel zum Aufnehmen der Ausgabe des Drucksensors.

12. Fahrwerk gemäß Anspruch 11, weiter umfassend Mittel zum Bestimmen, ob die Ausgabe des Drucksensors, oder ein davon abgeleiteter Wert, einen vorbestimmten Schwellenwert überschritten hat.

13. Fahrwerk gemäß Anspruch 6, in dem die Anzeige (60) einen hydraulischen Sensor umfasst, der ein Ausgabesignal in Übereinstimmung mit der Geschwindigkeit der Reaktionsbewegung in der auf Last reagierenden Einheit (9) erzeugt.

14. Fahrwerk gemäß einem der vorhergehenden Ansprüche, wobei eine oder beide der Drehpunkte, die die auf Last reagierende Einheit (9) mit dem Arm (4) und der Stoßdämpfer-Strebe (1) verbinden, Gelenklager umfassen.

15. Fahrwerk gemäß einem der vorhergehenden Ansprüche, wobei eine oder beide der Drehpunkte, die die auf Last reagierende Einheit (9) mit dem Arm (4) und der Stoßdämpfer-Strebe (1) verbinden, Bolzengelenke umfassen.

16. Fahrwerk gemäß Anspruch 9, weiter umfassend einen Lastrechner zum Verarbeiten der Ausgabe des Drucksensors, um einen Wert zu berechnen, der auf die auf den Arm (4) aufgebrachte Last schließen lässt.

17. Fahrwerk gemäß Anspruch 16, weiter umfassend einen Sensor zum Abtasten der Richtung der auf den Arm (4) aufgebrachten Last, und der eine Ausgabe erzeugt, die durch den Lastrechner verarbeitet wird, um einen Wert zu berechnen, der auf die auf den Arm (4) aufgebrachte Last schließen lässt.

18. Fahrwerk gemäß Anspruch 17, wobei der Sensor zum Abtasten der Richtung der auf den Arm (4) aufgebrachten Last einen Flugzeugstellungssensor umfasst.

19. Verfahren zum Überwachen der Last auf ein Fahrwerk für ein Flugzeug umfassend:
eine Stoßdämpfer-Strebe (1) mit oberen und unteren teleskopierenden Abschnitten (2, 3), der obere Abschnitt (2) ist mit der Flugzeugzelle des Flugzeugs verbindbar;
einen Arm (4), der sich der ganzen Länge nach relativ zum Flugzeug erstreckt und ein Landerad (7, 7') trägt und einen Hauptdrehpunkt (5), der zentral den Arm (4) mit dem unteren Abschnitt (3) der Stoßdämpfer-Strebe (1) verbindet; und eine auf Last reagierende Einheit (9) mit einem ersten Verbindungselement, einem ersten Drehpunkt zum zentralen Verbinden des ersten Verbindungselements mit der Stoßdämpfer-Strebe (1) oder mit der Flugzeugzelle, einem zweiten Verbindungselement, einem zweiten Drehpunkt zum zentralen Verbinden des zweiten Verbindungselements mit dem Arm (4),
einer teleskopierenden Einheit (9) zum Reagieren auf eine Last, die zwischen dem ersten und dem zweiten Verbindungselement aufgebracht wird,
**dadurch gekennzeichnet, dass** das Verfahren ein Überwachen der Reaktionslast in der teleskopierenden Einheit (9) umfasst.

20. Verfahren gemäß Anspruch 19, weiter umfassend Messen eines Flüssigkeitsdrucks in der teleskopierenden Einheit (9) und Verarbeiten der Messung, um einen Wert zu berechnen, der auf die auf den Arm (4) aufgebrachte Last schließen lässt.

21. Verfahren gemäß Anspruch 20, weiter umfassend Messen der Richtung der auf den Arm (4) aufgebrachten Last und Verarbeiten der gemessenen Richtung, um einen Wert zu berechnen, der auf die auf den Arm (4) aufgebrachte Last schließen lässt.

22. Verfahren gemäß einem der Ansprüche 19 bis 21, weiter umfassend Messen des Drucks und Aufnehmen des gemessenen Drucks, oder eines davon abgeleiteten Wertes.

23. Verfahren gemäß einem der Ansprüche 19 bis 21, weiter umfassend Messen des Drucks und Anzeigen des gemessenen Drucks, oder eines vom gemessenen Druck abgeleiteten Wertes.

24. Verfahren gemäß einem der Ansprüche 19 bis 23, weiter umfassend Messen des Drucks und Bestimmen, ob die Messung, oder ein davon abgeleiteter Wert, einen vorbestimmten Schwellenwert überschritten hat.

25. Verfahren gemäß Anspruch 19, weiter umfassend Überwachen eines Drucks in der ausfahrbaren Einheit (9) und Erzeugen eines Ausgabesignals in Übereinstimmung mit der Geschwindigkeit der Reaktionsbewegung in der teleskopierenden Einheit (9).

## Revendications

1. Train d'atterrissage pour un aéronef, comprenant :
un montant d'absorption de chocs (1) avec des parties supérieure et inférieure télescopiques (2, 3), la partie supérieure (2) pouvant être reliée à la cellule de l'aéronef ;
un bras (4) pour s'étendre longitudinalement par rapport à l'aéronef et supportant une roue d'atterrissage (7, 7'), et relié en pivotement par un pivot principal (5) à la partie inférieure (3) du montant d'absorption de chocs (1) ; et
une unité de réaction aux charges (9) reliée entre le bras (4) et le montant d'absorption de chocs (1) pour réagir à une charge appliquée entre le bras (4) et le montant d'absorption de chocs (1) à l'atterrissage, et
un indicateur (60) ;
**caractérisé en ce que** l'indicateur (60) surveille la charge appliquée à l'unité de réaction aux charges (9) à l'atterrissage.

2. Train d'atterrissage selon la revendication 1, dans lequel l'unité de réaction aux charges (9) est reliée entre une extrémité avant du bras (4) et la partie supérieure (2) du montant d'absorption de chocs (1) et sert à faire agir le train comme un train d'atterrissage à semi effet de levier.

3. Train d'atterrissage selon la revendication 1, dans lequel l'unité de réaction aux charges (9) est reliée entre le bras (4) et la partie inférieure (3) du montant d'absorption de chocs (1) pour agir comme un compensateur de tangage.

4. Train d'atterrissage selon la revendication 3, dans lequel l'unité de réaction aux charges (9) est reliée entre l'extrémité avant du bras (4) et la partie inférieure (3) du montant d'absorption de chocs.

5. Train d'atterrissage selon l'une quelconque des revendications précédentes, dans lequel le bras (4) comprend un balancier de bogie avec des roues d'atterrissage avant et arrière (7, 7') avec le pivot principal entre celles-ci.

6. Train d'atterrissage selon l'une quelconque des revendications précédentes, dans lequel l'unité de réaction aux charges (9) comprend une unité de pression de fluide et l'indicateur (60) est sensible à une pression dans l'unité.

7. Train d'atterrissage selon la revendication 6, dans lequel l'indicateur (60) comprend un indicateur mécanique exposé à une pression dans l'unité de manière à être actionné à un seuil de pression prédéterminé.

8. Train d'atterrissage selon la revendication 7, dans lequel l'indicateur mécanique coopère avec un cran chargé par ressort qui définit une position normale et une position actionnée de l'indicateur.

9. Train d'atterrissage selon la revendication 5 ou 6, comprenant deux ou plus de deux indicateurs réglés pour fonctionner à différentes pressions de seuil.

10. Train d'atterrissage selon la revendication 6, dans lequel l'indicateur (60) comprend un capteur de pression générant un signal de sortie selon une pression détectée.

11. Train d'atterrissage selon la revendication 10, comprenant en outre des moyens pour enregistrer la sortie du capteur de pression.

12. Train d'atterrissage selon la revendication 11, comprenant en outre des moyens pour déterminer si la sortie du capteur de pression, ou une valeur dérivée de celle-ci, a dépassé un seuil préréglé.

13. Train d'atterrissage selon la revendication 6, dans lequel l'indicateur (60) comprend un capteur hydraulique générant un signal de sortie selon la vitesse de mouvement de réaction dans l'unité de réaction aux charges (9).

14. Train d'atterrissage selon l'une quelconque des revendications précédentes, dans lequel un ou deux des pivots reliant l'unité de réaction aux charges (9) au bras (4) et au montant d'absorption de chocs (1) comprennent des paliers sphériques.

15. Train d'atterrissage selon l'une quelconque des revendications précédentes, dans lequel un ou deux des pivots reliant l'unité de réaction aux charges (9) au bras (4) et au montant d'absorption de chocs (1) comprennent des assemblages à goupilles.

16. Train d'atterrissage selon la revendication 9, comprenant en outre un calculateur de charge pour traiter la sortie du capteur de pression pour calculer une valeur indicative de la charge appliquée au bras (4).

17. Train d'atterrissage selon la revendication 16, comprenant en outre un capteur pour détecter la direction de la charge appliquée au bras (4) et générer une sortie qui est traitée par le calculateur de charge pour calculer une valeur indicative de la charge appliquée au bras (4).

18. Train d'atterrissage selon la revendication 17, dans lequel le capteur pour détecter la direction de la charge appliquée au bras (4) comprend un capteur d'assiette d'aéronef.

19. Procédé de surveillance de la charge sur un train d'atterrissage pour un aéronef comprenant :
un montant d'absorption de chocs (1) avec des parties supérieure et inférieure télescopiques (2, 3), la partie supérieure (2) pouvant être reliée à la cellule de l'aéronef ;
un bras (4) pour étendre longitudinalement par rapport à l'aéronef et supporter une roue d'atterrissage (7, 7'), et un pivot principal (5) reliant en pivotement le bras (4) à la partie inférieure (3) du montant d'absorption de chocs (1) ; et
une unité de réaction aux charges (9) avec un premier connecteur, un premier pivot pour relier en pivotement le premier connecteur au montant d'absorption de chocs (1) ou à la cellule, un second connecteur, un second pivot pour relier en pivotement le second connecteur au bras, une unité télescopique (9) pour réagir à une charge appliquée entre les premier et second connecteurs,
**caractérisé en ce que** le procédé comprend la surveillance de la charge de réaction dans l'unité télescopique (9).

20. Procédé selon la revendication 19, comprenant en outre la mesure d'une pression de fluide dans l'unité télescopique (9) et le traitement de la mesure pour calculer une valeur indicative de la charge appliquée au bras (4).

21. Procédé selon la revendication 20, comprenant en outre la mesure de la direction de la charge appliquée au bras (4) et le traitement de la direction mesurée pour calculer la valeur indicative de la charge appliquée au bras (4).

22. Procédé selon l'une quelconque des revendications 19 à 21, comprenant en outre la mesure de la pression et l'enregistrement de la pression mesurée, ou d'une valeur dérivée de celle-ci.

23. Procédé selon l'une quelconque des revendications 19 à 21, comprenant en outre la mesure de la pression et l'affichage de la pression mesurée, ou d'une valeur dérivée de la pression mesurée.

24. Procédé selon l'une quelconque des revendications 19 à 23, comprenant en outre la mesure de la pression et la détermination de si la mesure, ou une valeur dérivée de celle-ci, a dépassé un seuil préréglé.

25. Procédé selon la revendication 19, comprenant en outre la surveillance d'une pression dans l'unité télescopique (9) et la génération d'un signal de sortie en fonction de la vitesse de mouvement de réaction dans l'unité télescopique (9).
